# EUROPÄISCHE PATENTSCHRIFT

(11) **EP 0 321 705 B1**
(45) Veröffentlichungstag und Bekanntmachung des Hinweises auf die Patenterteilung: **17.02.1993**
(21) Anmeldenummer: 88119283.5
(22) Anmeldetag: 21.11.1988
(51) Int. Cl.: G01V 1/38

(54) **Verfahren zur Erfassung seismischer Daten**
Method for obtaining seismic data
Méthode pour saisir des données sismiques

(30) Priorität: 12.12.1987 DE 3742528
(43) Veröffentlichungstag der Anmeldung: 28.06.1989
(73) Patentinhaber: PRAKLA-SEISMOS GmbH, 30655 Hannover (DE)
(72) Erfinder: Marschall, Roland, Dr. Dipl.-Ing., D-3000 Hannover 91 (DE)
(74) Vertreter: Meyer, Ludgerus A., Dipl.-Ing.

(56) Entgegenhaltungen:
- EP-A- 0 169 149
- US-A- 3 781 776
- US-A- 3 921 124
- US-A- 4 486 863
- OFFSHORE, Band 47, Nr. 7, Juli 1987, Seiten 36-39, Tulsa, OK, US; J.I. SANDERS: "Seismic opens shallow play"

## Beschreibung

Die Erfindung betrifft ein Verfahren zur Erfassung seismischer Daten eines eine zentrale Struktur aufweisenden Gebietes nach dem Oberbegriff des Anspruchs 1.

Die Erfassung marineseismischer Daten erfolgt heute im wesentlichen durch hinter Schiffen geschleppte Streamer. Das Schiff wird dabei vorzugsweise in parallelen Kursen über das zu erfassende Gebiet geführt. An den jeweiligen Enden einer Strecke wird das Schiff dann in einem Bogen herumgeführt und in einem Abstand parallel zum vorhergehend gefahrenen Kurs in umgekehrter Richtung über das zu erfassende Gebiet geführt.

Das Umkehren an den Enden der abzufahrenden Kursstrecken ist zeitaufwendig und damit kostenverursachend, ohne daß während der Umkehrzeit Daten erfaßt werden können.

Zur Vermeidung der Umkehrwege sind verschiedene Wegemuster vorgeschlagen worden, die die Umkehrstrecken verkürzen. Aus der US-PS 4,486,863 ist ein Verfahren bekannt, bei dem ein Streamer über das zu erfassende Gebiet in zueinander entlang einer Fortschrittslinie versetzten Kreisen geführt wird. Das Schleppschiff fährt dabei kreisförmige Kurse ab, wobei der Streamer relativ genau dem abgefahrenen Kurs folgt. Um von einem Kreis zum nächsten zu gelangen, verläßt das Schiff, sobald sein Kurs parallel zur Fortschrittsrichtung der abzufahrenden Kreise fährt, den erfaßten Kreis tangential und fährt dann tangential in den nächstfolgenden Kreis ein, der dann wiederum komplett abgefahren wird, usw.

Das dargestellte Verfahren ist nur für die Erfassung eines großen zusammenhängenden Gebietes vorgesehen und ermöglicht die Vermeidung von Umkehrstrecken, die keinen Beitrag zur Datenerfassung liefern.

Die dargestellte "Flächenseismik" ist dann nicht mehr ohne weiteres einsetzbar, wenn Hindernisse, wie Inseln, die Erfassung einer zusammenhängenden Fläche verhindern. Gerade die unmittelbare Umgebung um eine sehr kleine Insel kann aber von besonderer Bedeutung für seismische Untersuchungen sein.

Ausgehend von diesem Stand der Technik liegt der Erfindung daher die Aufgabe zugrunde, ein Verfahren zur Erfassung seismischer Daten eines Gebietes anzugeben, das eine zentrale Struktur aufweist, eine der Struktur angepaßte Datenerfassung und eine einfache Answertung der erfaßten Daten ermöglicht sowie auf einfachem Wege durchführbar ist, ohne daß nicht zum gewünschten Datenvolumen beitragende Kursstrecken abzufahren wären.

Diese Aufgabe wird durch die in Anspruch 1 angegebene Erfindung gelöst. Vorteilhafte Weiterbildungen der Erfindung sind in abhängigen Ansprüchen angegeben.

Die Erfindung eignet sich insbesondere zur seismischen Datenerfassung um zentrale Strukturen eines Objektes, wie z. B. kleine Inseln, im Untergrund vorhandene Salzfinger oder ähnliche punktförmige Strukturen. Die Datenerfassung erfolgt im wesentlichen polar durch das Abfahren eines spiralförmigen Kurses, so daß bei einer 3D-Erfassung, ausgehend von der zentralen Struktur, Vertikalschnitte in jeder gewünschten azimutalen Richtung erhältlich sind. Auf diese Weise kann eine hohe Datendichte für die zentrale Struktur gewonnen werden, die auf andere Weise nicht erreichbar wäre.

In einer bevorzugten Ausführungsform der Erfindung ist ein spiralförmiger Kurs gewählt, bei dem der radiale Abstand zwischen den Spirallinien gemäß einer archimedischen Spirale konstant ist.

Die Erfindung wird nachstehend anhand eines Ausführungsbeispiels näher erläutert.

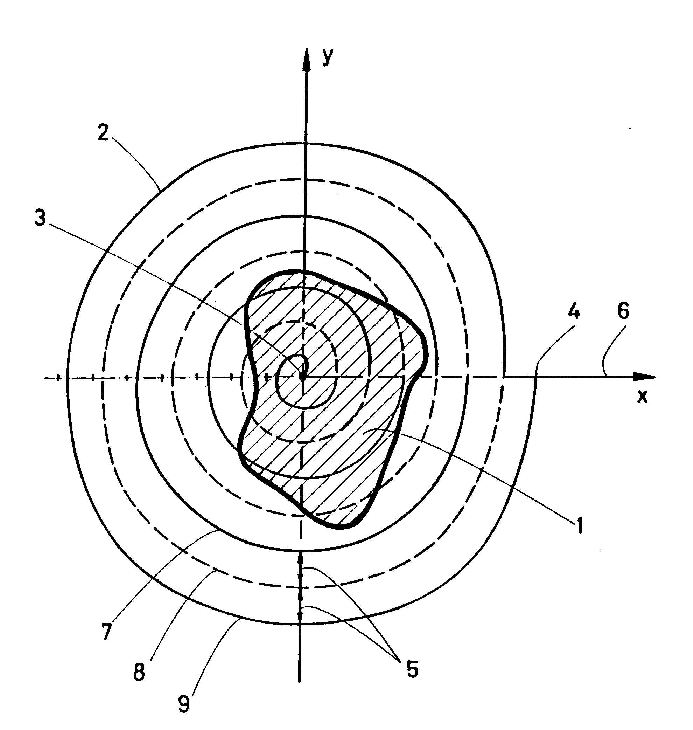

Die Figur zeigt eine zentrale Struktur in einem Meeresgebiet, z. B. eine Insel, deren Flankenstruktur erfaßt werden soll.

In bestimmten Meeresgebieten treten Strukturen auf, die z. B. als kleine Inseln in Erscheinung treten oder die fingerförmig aus tieferen Untergrundschichten hervorragen. Eine flächenmäßige Erfassung mit Hilfe üblicher Streamertechnik ist nur möglich, wenn die Strukturen unterhalb der Wasseroberfläche enden. Aus einem auf diese Weise hergestellten 3D-Datenvolumen können zwar auch Vertikalschnitte als Radialschnitte ausgehend von der Struktur erstellt werden, jedoch ist dafür ein erheblicher Rechenaufwand notwendig. Wenn die Struktur als Insel aus dem Wasser hervortritt, ist eine ausreichend genaue Erfassung der Flanken der Struktur nicht ohne weiteres möglich.

Nach dem erfindungsgemäßen Verfahren wird für das den Streamer schleppende Schiff ein spiralförmiger Kurs gewählt. Dadurch kann das Schiff von einem Ausgangsort bis zu einem Endpunkt über eine große Fläche geführt werden, ohne daß Umkehrkurse gefahren werden müssen.

Da das erfindungsgemäße Verfahren auf einer Datenerfassung während eines Umlaufes um eine Struktur basiert, ist es insbesondere für zentrale Strukturen mit Vorteil einzusetzen.

Zur Vermeidung von Umkehrstrecken und Anpassungsstrecken, wie sie bei einer kreisförmigen Erfassung notwendig sind, wird gemäß der Erfindung ein spiralförmiger Kurs gewählt, dessen Spirale in einer besonderen Ausführungsform der Erfindung eine archimedische Spirale ist. Diese zeichnet sich dadurch aus, daß der Abstand zwischen nebeneinanderliegenden Spirallinien über den gesamten Umfang konstant ist. Bei Betrachtung einer radialen Linie, ausgehend von der Struktur, liegen daher die Schnittpunkte der Radiallinie mit den Spirallinien äquidistant verteilt. Diese Verteilung gilt für sämtliche Radiallinien.

Die Verwendung einer archimedischen Spirale weist den besonderen Vorzug auf, daß aufgrund des konstanten Abstandes der Spirallinien entlang einer Radiallinie sich unmittelbar die Samplingrate quer zum Kurs ergibt. Daraus folgt, daß die schließliche 3D-Auswertung der erfaßten Daten auf relativ einfache Weise Horizontalschnitte in jeder beliebigen azimutalen Richtung ermöglicht. Dieses ist von besonderer Bedeutung, wenn die Flanken der Struktur insbesondere im Übergang von der Vertikalen zur Horizontalen (insbesondere in bezug auf die Anschlepppunkte) untersucht werden sollen. Die verwendete Spirallinie stellt in bezug auf die angeschleppten Horizonte ein kontinuierlich im Streichen dieser Horizonte registriertes Profil dar. Daher sind für die angeschleppten Horizonte die entsprechenden Stapelgeschwindigkeiten nicht mehr neigungsabhängig.

Die Bogenlänge der Spirale bestimmt die Zahl der Rasterpunkte während eines Umlaufes des Streamers um die Struktur.

Die Figur zeigt das Prinzip der Erfindung. Auf eine zentrale Struktur 1 wird, z. B. eine Insel, eine Spirallinie 2 gelegt, deren Ursprung 3 sich etwa im Zentrum der Struktur befindet. Da eine archimedische Spirale verwendet ist, sind die Abstände der einzelnen Spirallinienabschnitte, z. B. zwischen den Abschnitten 7, 8 und 9 äquidistant. Die Radiallinie 6 schneidet daher die Spirallinie in gleichen Abständen 5 bis zum Endpunkt 4 der Spirallinie 2.

Die Größe der Struktur 1 bedingt, daß eine seismische Erfassung mit Hilfe eines geschleppten Streamers nur auf den Spirallinienabschnitten 7, 8 und 9 möglich ist.

Vorzugsweise wird der Abstand der Spirallinie kleiner als 50 m gewählt, um eine ausreichend dichte Datenerfassung zu ermöglichen. Der Endradius der Spirallinie hängt von der Art der erfaßten Struktur, der zu erfassenden Teufe und der radialen Ausbreitung der Struktur im Untergrund ab.

Das erfindungsgemäße Verfahren ermöglicht eine schnelle, genaue, besonders aussagekräftige Erfassung seismischer Daten um eine zentrale Struktur herum.

### Bezugszeichenliste

- 1: Struktur
- 2: Spirale
- 3: Zentrum
- 4: Endpunkt
- 5: Abstand
- 6: Radiallinie
- 7: Spiralenabschnitt
- 8: Spiralenabschnitt
- 9: Spiralenabschnitt

## Patentansprüche

1. Verfahren zur Erfassung seismischer Daten eines eine zentrale Struktur (1) aufweisenden Gebietes mit Hilfe eines von einem Schiff geschleppten Streamers, dadurch gekennzeichnet, daß das Schiff zur Erfassung der Daten einen spiralförmigen Kurs (2) beschreibt, dessen Spiralzentrum die zentrale Struktur bildet.

2. Verfahren nach Anspruch 1, dadurch gekennzeichnet, daß die Spirale (2) eine archimedische Spirale mit konstanten radialem Abstand zwischen benachbarten Spirallinienabschnitten (7, 8, 9) ist.

3. Verfahren nach Anspruch 1 oder 2, gekennzeichnet durch die Verwendung zur Ermittlung eines 3D-Datenvolumens des die zentrale Struktur einschließenden Gebietes.

4. Verfahren nach Anspruch 3, dadurch gekennzeichnet, daß aus dem 3D-Datenvolumen Radialschnitte, ausgehend von der zentralen Struktur, abgeleitet werden.

## Claims

1. A method of gathering seismic data of a region of a type having a stationary structure (1) therein using a streamer towed behind a ship characterized in that for gathering the data the ship defines a spiral path using the structure as the centre of the spiral.

2. A method according to claim 1, characterized in that the spiral (2) is an Archimedian spiral with a constant radial distance between adjacent sections of the spiral turns (7, 8, 9) the distance along any radial line is constant from one spiral turn to the next.

3. A method according to claim 1 or 2, characterized by using the method for constructing a three-dimensional data volume for the region surrounding the structure.

4. A method according to claim 3 wherein radial sections starting from the central structure are derived from the three-dimensional data volume.

## Revendications

1. Procédé pour saisir des données sismiques d'une zone présentant une structure centrale (1), à l'aide d'une flûte marine traînée par un navire, caractérisé en ce que pour la saisie des données, le navire décrit une route en spirale (2), le centre de la spirale de celle-ci formant la structure centrale.

2. Procédé selon la revendication 1, caractérisé en ce que la spirale (2) est une spirale d'Archimède avec un écartement radial constant entre des segments de spirale voisins (7, 8, 9).

3. Procédé selon la revendication 1 ou 2, caractérisé par l'utilisation, pour la détection d'un volume de données en trois dimensions, de la zone contenant la structure centrale.

4. Procédé selon la revendication 3, caractérisé en ce que des sections radiales partant de la structure centrale sont déduites des volumes de données en trois dimensions.
